Europäisches Patentamt

European Patent Office

Office européen des brevets

(11) Publication number: 0 373 860
A2

# EUROPEAN PATENT APPLICATION

(21) Application number: 89312911.4

(22) Date of filing: 11.12.89

(51) Int. Cl.⁵: C08G 65/28

(30) Priority: 13.12.88 GB 8829033

(43) Date of publication of application:
20.06.90 Bulletin 90/25

(84) Designated Contracting States:
DE FR GB

(71) Applicant: UNIVERSITY OF MANCHESTER
INSTITUTE OF SCIENCE AND TECHNOLOGY
PO Box 88
Manchester M60 1QD(GB)

Applicant: NIPPON PAINT CO., LTD.
19-17, Ikeda Nakamachi
Neyagawa Osaka 572(JP)

(72) Inventor: Hirasawa, Yoji
8-8-10, Nagamodai, Kamo-cho Soraku-gun
Kyoto(JP)
Inventor: Stanford, John Lawrence
4 Winchester Road Davyhulme Urmston
Manchester, M31 1UJ(GB)
Inventor: Still, Richard Heywood
12 Hilton Road Disley
Cheshire, SK12 2BU(GB)
Inventor: Akenhead, Simon
186 Liverpool Road
Reading Berkshire, RG1 3PH(GB)

(74) Representative: Atkinson, Peter Birch et al
Marks & Clerk Suite 301 Sunlight House
Quay Street
Manchester M3 3JY(GB)

(54) Formation of polyether polyols.

(57) Polyether polyols are produced by the oxyalkylation of a polyhydroxy compound by a method in which a salt of the polyhydroxy compound is initially prepared and the by-products of salt formation are substantially completely removed prior to reaction of the salt with an alkylene oxide. For preference, the salt formation reaction is effected by dissolving the polyhydroxy compound in a nitrogen containing heterocyclic solvent (most preferably N-methyl pyrrolidone) and reacting the polyhydroxy compound with an alkali metal alkoxide to form the salt. The by-product alcohol of this reaction is then removed by distillation or evaporation prior to reaction of the salt with the alkylene oxide.

## FORMATION OF POLYETHER POLYOLS

The present invention relates to the formation of polyether polyols by the oxyalkylation of polyhydric alcohols.

The formation of polyether polyols by the reaction of a polyhydric initiator compound (e.g. pentaerythritol) with an alkylene oxide (e.g. ethylene oxide or propylene oxide) in the presence of a basic catalyst, for example an alkali metal hydroxide, is well known. The oxyalkylation proceeds by proton removal from the hydroxyl groups of the polyhydroxy compound (thus effectively forming a salt of the polyhydroxy compound) followed by nucleophilic attack on the epoxide ring. Chain extension takes place by reaction of the generated nucleophilic group on the epoxide residue with further free alkylene oxide compound.

An example of such a process is disclosed in WO-A-8602635 wherein the reaction is conducted in a nitrogen containing heterocyclic solvent in which the catalyst and reactants are substantially completely dissolved. However a problem with this and other prior processes is that high molecular weight products may be comparatively difficult to obtain and, even if possible, may require a multi-stage process. For example, the oxypropylation of pentaerythritol using the process of WO-A-8602635 as a one-stage synthesis yields a maximum molecular weight of about 3000. Moreover, it is difficult to obtain high molecular weight products with a narrow molecular weight distribution.

These difficulties are due firstly to the fact that the reactivity at the growth end of the molecule decreases as the molecular weight increases and, secondly, because of side reactions. These side reactions include formation of unsaturated groups at the growth end of the chain and also reaction of the growing end with a diol generated in situ by reaction of the alkylene oxide and water. This latter reaction is illustrated below for the case where the diol is ethylene glycol (derived from ethylene oxide).

$-O^-K^+ + HO\text{-}CH_2\text{-}CH_2\text{-}OH \rightarrow -OH + K^+{}^-O\text{-}CH_2\text{-}CH_2\text{-}OH$ (growing chain end)

The aim of this invention is to obviate or mitigate the above disadvantage.

According to the present invention, there is provided a method for the formation of polyether polyols by the oxyalkylation of a polyhydroxy compound comprising preparing a salt of the polyhydroxy compound which is wholly in a liquid phase, removing substantially all of the by-products of salt formation, and reacting the salt with an alkylene oxide.

A feature of the invention is that the salt formation reaction is effected with the polyhydroxy compound being in a liquid phase. In a first embodiment of the invention the polyhydroxy compound is completely dissolved in a solvent, with heating if necessary. The use of a solvent will be essential if the polyhydroxy compound is a liquid. Preferred solvents are water soluble organic solvents, particularly nitrogen containing heterocyclic solvents, e.g. N-methyl pyrrolidone.

In a second embodiment of the invention the polyhydroxy compound may itself be a liquid and used without further solvent. Such liquid polyhydroxy compounds may be prepolymers, for example low molar mass tetrols prepared by an oxyalkylation reaction.

In the present invention, by-products associated with salt formation are removed prior to reaction of the salt with the alkylene oxide. We believe that it is the presence of these by-products in the prior art processes which have led to the difficulties in obtaining high molecular weight products. Their removal in the process of the invention allows high molecular weight products to be obtained easily, usually with only a one-stage reaction subsequent to salt formation. For example, oxypropylation of pentaerythritol using the method of this invention yields a molecular weight (Mn) of over 7700, as can be seen from Example 1 below.

Polyhydroxy compounds which may be used in the invention preferably have a functionality of at least 2 and may for example be diols, triols, tetrols, pentols or hexols. Specific examples include ethylene glycol, glycerol, trimethylol propane (TMP), propylene glycol, butane diol, pentaerythritol, sucrose, sorbitol and 1, 2, 6-hexane triol and derivatives thereof. It is also within the scope of the invention for the polyhydroxy initiator compound used as the starting material to be an adduct or prepolymer formed by reaction of hydroxy compounds as exemplified in the previous sentence with an alkylene oxide. Such adducts or prepolymers may be liquid and, if so, may be used without dissolution in a solvent. Preferably such adducts or prepolymers have also been produced from a polyhydroxy compound using the method of the invention.

Thus the invention also encompasses a multi (preferably two) stage reaction for the formation of the polyether polyol, the first stage comprising using the method of the invention to produce a liquid adduct or prepolymer from a solid polyhydroxy initiator compound and then chain extension of this adduct or prepolymer by a further reaction in accordance with the invention.

Whichever polyhydroxy compound is used, it must be wholly in a liquid phase for the salt formation reaction. If the polyhydroxy compound is a solid then a nitrogen containing heterocyclic solvent is preferably used for the salt formation reaction. The preferred solvent is N-methyl- pyrrolidone (NMP). The use of such heterocyclic solvents, particularly NMP, is advantageous as it allows the salt formation reaction and subsequent oxyalkylation reaction to be conducted at atmospheric pressure using temperatures of greater than 100°C (e.g. 100° - 140°) thus avoiding the need for an autoclave.

Where the polyhydroxy compound is a liquid, as may be the case with the aforementioned adducts or prepolymers, it may be possible to conduct the salt formation reaction without additional solvent.

A number of methods of salt formation may be employed. Typically the salt will be formed by reaction of the polyhydroxy compound with a base containing an alkali metal cation and a basic anion. The alkali metal is preferably sodium or potassium and the basic cation may for example be the hydroxide ion or an alkoxide ion. The use of an alkali metal alkoxide yields an alcohol as a by-product of salt formation and therefore the alkoxide should be one which producing an alcohol which may be readily removed from the salt, e.g. by distillation. Preferred alkoxides are those having up to 4 carbon atoms.

The preferred alkoxides are methoxides and t-butoxides and the preferred alkali metals are sodium and potassium. The use of alkali metal alkoxides is preferred to alkali metal hydroxides because of their higher solubility in the liquid phase in which the polyhydroxy initiator compound is present. In the case where the initiator compound is dissolved in a water soluble organic solvent the initiator alcoholate produced is also soluble in the solvent. The alcohol produced during formation of the initiator alcoholate is removed from the reaction media prior to reaction with alkylene oxide. Most preferably the alcohol is removed either during formation of the initiator compound alcoholate or immediately thereafter. Most preferably the alcohol is removed by distillation possibly with the addition of toluene or xylene to the reaction medium to assist the removal of alcohols of low volatility.

It may also be possible to use sodium or potassium hydroxide, in which case the water formed during salt formation may be removed by distillation.

A further method of salt formation is to react the polyhydroxy compound with sodium or potassium metal. The by-product of salt formation is hydrogen which is evolved from the reaction medium.

Although it is essential that the polyhydroxy compound be in a liquid phase during the salt formation reaction, it is possible that the agent used for salt formation may be in a separate solid phase. This will particularly be the case where sodium or potassium metal is used for salt formation.

Ideally the salt formation reaction will be conducted so that each hydroxyl group of the polyhydroxy compound is converted to an anionic group of the salt. The amount of base or sodium or potassium metal to be reacted with the polyhydroxy compound may therefore be calculated accordingly. In some certain cases however it may be desirable to retain free hydroxyl groups on the polyhydroxy compound and once again the amount of base, sodium or potassium to be used may be easily determined.

After removal of the by-product of salt formation, the salt (which should still be in liquid medium) is reacted with an alkylene oxide, most preferably propylene oxide. The oxyalkylation reaction may be conducted at elevated temperature under nitrogen at atmospheric pressure by the dropwise addition of the alkylene oxide to the salt. The hydroxyl groups for the final polyether polyol may be generated in any suitable way, eg. by washing the oxyalkylated product with water or dilute acid.

The following Examples illustrate the invention. In Examples 1 and 2, the GPC analysis was effected using a polystyrene the standard. In Examples 3-5 the standard was polyethylene glycol. All results are without low molar mass tails.

Example 1

In a 2 litre round-bottomed flask equipped with condenser, stirrer, dropping funnel and thermometer, 400g of N-methyl pyrrolidone, 3.81g of potassium t-butoxide and 25.1g of pentaerythritol were charged and heated slowly with continuous stirring up to about 100°C under an atmosphere of nitrogen. When the temperature reached 100°C the reaction mixture became deep red. The solution was maintained at 120°C for two hours, thereafter it was cooled to room temperature. The reaction product was placed in a 1 litre flask and evaporated over a water bath at about 70 - 80°C for two hours under a pressure of 10mm Hg in order to remove t-butanol produced in the salt formation reaction from the reaction mixture. 400g of this solution was again charged in the above 2 litre round-bottomed flask and heated up to 140°C while bubbling nitrogen. At 140°C, 2000ml of propylene oxide were added into the solution over 8 hours. The obtained solution was clear deep red. It was then purified by means of extraction with diethylether/$H_2O$. The obtained polymer was clear yellow.

Analysis by GPC: Mn = 7720, Mw/Mn = 1.04

Example 2

In a 2 litre round-bottomed flask equipped with condenser, stirrer, dropping funnel and thermometer, 400g of pentaerythritol based prepolymer (Mn = 2564, Mw/MN = 1.30) and 3.0g of potassium methoxide were charged and heated slowly with continuous stirring up to about 100°C under an atmosphere of nitrogen. When the temperature reached about 100°C, the reaction mixture became dark red. The product was maintained at 130°C for two hours, thereafter, it was cooled to room temperature. The reaction product was placed in a 1 litre flask and evaporated over a water bath at 80-90°C for two hours under a pressure of 10mm Hg, in order to remove the methanol produced in the salt formation reaction from the reaction mixture. 334g of this alkoxylated prepolymer salt was again charged in the above 2 litre round bottomed flask and heated up to 140°C while bubbling nitrogen. At 140°C, 800ml of propylene oxide was added into the alkoxylated prepolymer over 7 hours. The obtained polymer was clear and dark red. It was purified by extraction with diethylether/H₂O. The obtained polymer was clear yellow.
Analysis by GPC: Mn = 4373, Mw/Mn = 1.05.

Example 3

In a 2 litre round-bottomed flask equipped with condenser, stirrer, dropping funnel and thermometer 80g of pentaerythritol based prepolymer (Mn = 1010, Mw/Mn = 1.05) and 2g of potassium metal (as small lumps) were charged. Dissolution of the potassium was effected at 140°C under nitrogen with stirring and took Ca 2 hours. 1500cm³ of propylene oxide was added over 4 ³/₄ hours at 140°C. The chain extended potassium salt was dissolved in toluene and neutralised by repeated washings with dilute acid. The aqueous layers were discarded and the toluene removed from the organic layer by rotary evaporation. The obtained polymer was clear and pale yellow in colour.
Analysis by GPC: Mn = 6830, Mw/Mn = 1.04.

Example 4

In a 1 litre round bottomed flask equipped with condenser, stirrer, dropping funnel and thermometer 80g of pentaerythritol based prepolymer (Mn = 1939, Mw/Mn = 1.13) and 1g of potassium metal (as small pieces) were charged. Dissolution of the potassium was effected at 140°C under nitrogen with stirring and took Ca 2 hours. 500cm³ of propylene oxide were over 4½ hours at 140°C. The chain extended potassium salt was dissolved in toluene and neutralised by repeated washings with dilute acid. The aqueous layers were discarded and the toluene removed from the organic layer by rotary evaporation. The obtained polymer was clear and almost colourless.
Analysis by GPC: Mn = 7240, Mw/Mn = 1.06.

Example 5

In a 1 litre Buchi flask 200g of pentaerythritol based prepolymer (Mn = 1010, Mw/Mn = 1.05), 200cm³ of toluene and 14.35g of potassium tertiary butoxide were charged. The toluene and tertiary butanol were removed by rotary evaporation over a boiling water bath for 1½ hours. The potassium salt obtained had a deep red/brown colouration and a much higher viscosity than the initial tetrol. To a 1 litre round bottomed flask equipped with condenser, stirrer, dropping funnel and thermometer 82g of potassium salt was charged. 1000cm³ of propylene oxide was added over 4 ³/₄ hours at 140°C with stirring under nitrogen. The chain extended potassium salt was dissolved in toluene and neutralised by repeated washings with dilute acid. The aqueous layers were discarded and the toluene removed from the organic layer by rotary evaporation. The obtained polymer was clear and pale yellow in colour.
Analysis by GPC: Mn = 6970, Mw/Mn = 1.04.

**Claims**

1. A method of producing polyether polyols by the oxyalkylation of a polyhydroxy compound comprising preparing a salt of the polyhydroxy compound which is wholly in a liquid phase, removing substantially all of the by-products of salt formation, and reacting the salt with an alkylene oxide.

2. A method as claimed in Claim 1 wherein, for the salt formation reaction, the polyhydroxy compound is completely dissolved in a solvent.

3. A method as claimed in Claim 2 wherein the solvent is a water soluble organic solvent.

4. A method as claimed in Claim 3 wherein the water soluble organic solvent is a nitrogen containing heterocyclic compound.

5. A method as claimed in Claim 4 wherein the heterocyclic solvent is N-methyl pyrrolidone.

6. A method as claimed in Claim 4 or 5 wherein the salt formation reaction is effected at atmospheric pressure and at a temperature of 100-140°C.

7. A method as claimed in any one of Claims 1 to 6 wherein the polyhydroxy compound is selected from the group consisting of diols, triols, tetrols, pentols, and hexols.

8. A method as claimed in Claim 7 wherein the polyhydroxy compound is selected from ethylene glycol, glycerol, trimethylol propane, propylene glycol, butane diol, pentaerythritol sucrose, sorbitol, and 1, 2, 6-hexane triol.

9. A method as claimed in Claim 1 wherein the polyhydroxy compound is a liquid.

10. A method as claimed in Claim 9 wherein the liquid polyhydroxy compound is an adduct or a prepolymer of a di- or functionality hydroxy compound with an alkylene oxide.

11. A method as claimed in Claim 8 wherein the liquid polyhydroxy compound is an adduct or prepolymer of pentaerythritol and propylene oxide.

12. A method as claimed in any one of Claims 9 to 11 wherein the liquid phase for the salt formation reaction is provided solely by the liquid polyhydroxy compound.

13. A method as claimed in any one of Claims 1 to 12 wherein the salt is formed by a reaction of the polyhydroxy compound with an alkali metal alkoxide.

14. A method as claimed in Claim 13 wherein the alkali metal is potassium or sodium.

15. A method as claimed in Claim 13 or 14 wherein the alkoxide ion has 1-4 carbon atoms.

16. A method as claimed in Claim 15 wherein the alkali metal alkoxide is the methoxide or t-butoxide.

17. A method as claimed in any one of Claims 13 to 16 wherein the by-product alcohol is removed by distillation or evaporation.

18. A method as claimed in any one of Claims 1 to 12 wherein the salt formation reaction is effected with an alkali metal hydroxide.

19. A method as claimed in any one of Claims 1 to 12 wherein the salt formation reaction is effected by reaction of the polyhydroxy compound with sodium or potassium.

20. A method as claimed in an one of Claims 1 to 19 wherein the alkylene oxide is ethylene oxide or propylene oxide.

21. A method of producing polyether polyols by the oxyalkylation of a polyhydroxy compound comprising substantially completely dissolving the polyhydroxy compound in a nitrogen containing heterocyclic solvent, reacting said compound with an alkali metal alkoxide having 1 to 4 carbon atoms, removing from the reaction medium substantially all of the alcohol produced in the salt formation reaction, and subsequently reacting the salt with an alkylene oxide.

22. A method as claimed in Claim 21 wherein the alkali metal alkoxide is the methoxide or t-butoxide.

23. A method as claimed in Claim 21 or 22 wherein the nitrogen containing heterocyclic solvent is N-methyl pyrrolidone.

24. A method as claimed in any of Claims 21 to 23 wherein the alkylene oxide is propylene oxide.